Europäisches Patentamt

European Patent Office

Office européen des brevets

(11) Veröffentlichungsnummer: **0 325 733**
**A2**

(12) **EUROPÄISCHE PATENTANMELDUNG**

(21) Anmeldenummer: **88119952.5**

(22) Anmeldetag: **30.11.88**

(51) Int. Cl.⁴: **B23B 51/00**

(30) Priorität: **28.01.88 DE 3802421**
**09.06.88 DE 3819650**

(43) Veröffentlichungstag der Anmeldung:
**02.08.89 Patentblatt 89/31**

(84) Benannte Vertragsstaaten:
**AT BE CH ES FR GB IT LI NL**

(71) Anmelder: **fischerwerke Artur Fischer GmbH & Co. KG**
**Weinhalde 14-18**
**D-7244 Tumlingen/Waldachtal 3(DE)**

(72) Erfinder: **Fischer, Artur, Prof.Dr.h.c.**
**Weinhalde 34**
**D-7244 Waldachtal 3/Tumlingen(DE)**

(74) Vertreter: **Ott, Elmar, Dipl.-Ing.**
**fischerwerke Artur Fischer GmbH & Co KG**
**Weinhalde 14-18**
**D-7244 Waldachtal 3/Tumlingen(DE)**

(54) **Bohrvorrichtung zur Herstellung von Bohrlöchern mit Hinterschneidung.**

(57) Die in einem Mauerwerk einzusetzenden Spreizdübel können in Bohrlöcher mit Hinterschneidung formschlüssig eingesetzt werden. Zur Herstellung einer solchen Hinterschneidung wird ein Bohrer verwendet, dessen Bohrplättchen über den Bohrschaft übersteht, so daß durch eine Schwenkbewegung des Bohrers die Hinterschneidung entsteht.

Um einen definierten Schwenkbereich und damit definierte Hinterschneidungen zu erhalten, ist eine dem Bohrschaft umschließende Führungshülse vorgesehen, welche vorzugsweise eine konische Innenfläche besitzt. Die konische Innenfläche begrenzt den Schwenkbereich des Bohrers.

Fig.1

EP 0 325 733 A2

## Bohrvorrichtung zur Herstellung von Bohrlöchern mit Hinterschneidung

Die Erfindung betrifft eine Bohrvorrichtung gemäß der Gattung des Hauptanspruches.

Um einen Spreizdübel in einem Bohrloch formschlüssig verankern zu können, ist es bekannt, am Bohrlochgrund eine Hinterschneidung durch Verschwenken des Bohrers herzustellen. In die Hinterschneidung greift dann ein eingesetzter Spreizdübel mit seinem Spreizteil ein.

Aus der DE-OS 23 49 998 ist eine Bohrvorrichtung zur Herstellung eines Bohrloches mit Hinterschneidung bekannt, bei der am Bohrschaft ein kugelförmiger Bund als Schwenklager angeordnet ist. Der Bund kann während des Schwenkens an der Bohrlochmündung zur Bildung eines Schwenklagers anliegen. Bei dieser bekannten Bohrvorrichtung kann das im Bohrloch während des Bohrvorgangs anfallende Bohrmehl nicht ohne weiteres nach außen transportiert werden. Außerdem ist der Schwenkbereich nicht begrenzt, so daß undefinierte Hinterschneidungen entstehen können die an einen einzusetzenden Spreizdübel nicht optimal angepaßt sind.

Der Erfindung liegt die Aufgabe zugrunde, eine Bohrvorrichtung zur Herstellung von Bohrlöchern mit Hinterschneidung zu schaffen, die in ihrem Aufbau einfach ist und einen Schwenkbereich zur Herstellung der Hinterschneidung definiert.

Die Lösung dieser Aufgabe wird bei einer Bohrvorrichtung der eingangs genannten Gattung durch die im kennzeichnenden Teil des Hauptanspruchs angegebenen Merkmale erhalten. Zwischen Bund und Bohrplättchen ist eine dem Bohrschaft umgreifenden Führungshülse angeordnet, deren unterschiedlich große Öffnungen den Schwenkbereich für den Bohrer festlegen. Eine der beide Öffnungen umschließt dabei den Bohrschaft so, daß nur ein geringer Spalt freibleibt, während die andere Öffnung einen großen Ringspalt zwischen Bohrschaft und Öffnungsrand freigibt.

Die beiden an den Enden der Führungshülse befindlichen Öffnungen gehen vorzugsweise durch eine konische Hülseninnenfläche ineinander über. Dabei ist es möglich, die größere Öffnung an dem der Bohrspitze zugewandten Hüsenende oder an dem dem Bund zugewandten Hülsenende vorzusehen. In jeden Fall liegt der Drehpunkt für die Schwenkbewegung des Bohrers im Bereich der kleineren Öffnung.

Der am Bohrschaft abstehende Bund liegt an einem Hülsenrand an, der gleichzeitig als Wandanschlag dient. An seiner Wandanschlagsfläche ist der Hülsenrand vorzugsweise mit einem elastischem Material, beispielsweise Kunststoff oder Gummi, beschichtet.

Die dem Bund zugewandte Seite des Hülsenrandes ist vorzugsweise mit einer dem Bund entsprechenden Wölbung versehen. Der gewölbte Bund in Verbindung mit einer am Hülsenrand gewölbt ausgebildeten Anlagefläche bildet ein stabiles Schwenklager.

Die Führungshülse kann an eine Absaugvorrichtung zum Absaugen des Bohrmehls angeschlossen sein. In der bevorzugten einfachen Ausführung besitzt jedoch der Bohrschaft Bohrmehlnuten, die das anfallende Bohrmehl durch die Führungshülse aus dem Bohrloch heraus transportieren.

Damit die Führungshülse beim Zurückziehen des Bohrers aus dem Bohrloch nicht durch die scharfe Unterkante des Bohrplättchens beschädigt wird, ist im Übergangsbereich zwischen Bohrschaft und Bohrplättchen eine Erweiterung vorgesehen, die als Rückziehanschlag dient. Diese Erweiterung ist ringförmig ausgebildet, so daß sie einen kantenlosen Anschlag für den Öffnungsrand der Führungshülse bildet.

Die Erweiterung ist vorzugsweise vom Bohrschaft ausgehend konisch ausgebildet und hintergreift das seitlich überstehende Bohrplättchen jeweils an der seinen Seitenschneiden abgewandten Rückseiten. Der Ansatzbereich der konischen Erweiterung bildet dabei den kantenlosen Anschlag für die Führungshülse, da die Erweiterung bereits unterhalb des Bohrplättchens einen größeren Außendurchmesser besitzt als der Innendurchmesser der Öffnung der Führungshülse.

Die Erfindung wird nachfolgend anhand der Zeichnung näher erläutert.

Es zeigen:

Figur 1 eine in einem Bohrloch einer Wand eingesetzte Bohrvorrichtung,

Figur 2 eine Ausführungsform einer Führungshülse ,

Figur 3 eine Bohrvorrichtung mit einem am Bohrschaft angeordneten tellerförmigem Bund und

Figur 4 eine Bohrvorrichtung mit erweitertem Bohrschaft.

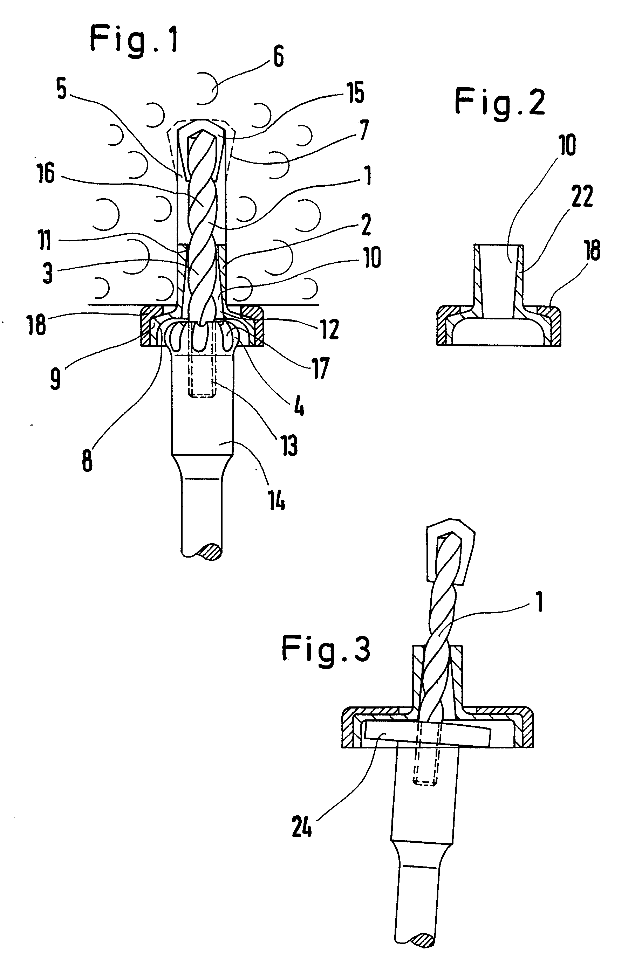

In Figur 1 ist eine Bohrvorrichtung, bestehend aus einem Bohrer 1 einer Führungshülse 2 und einem im Bereich des Bohrschaftes abstehenden Bund 4, in einem Bohrloch 5 eines Mauerwerks 6 eingesetzt. Während des Bohrvorgangs wirkt die Führungshülse 2 als Führungs- bzw. Zentrierelement, um zu verhinern, daß der Bohrer 1 seitlich abwandert.

In der dargestellten Stellung kann nun durch Verschwenken des Bohrers 1 eine Hinterschneidung 7 hergestellt werden, die in der Zeichnung mit unterbrochenen Linien dargestellt ist. Während des Schwenkvorgangs wird der Bohrer wie bei der Herstellung des Bohrloches von einer hier nicht dargestellten Bohrmaschine angetrieben und gleichzeitig von Hand verschwenkt. Dabei liegt der Bund 4 an einer gewölbten Anlagefläche 8 des Hülsenrandes 9 an. Die konische Innenfläche 10 der Führungshülse 2 begrenzt die Schwenkbewegung, deren Drehpunkt im Bereich der Öffnung 11 der Führungshülse 2 liegt. Deren größere Öffnung 12 ist kleiner ausgebildet als der Durchmesser des Bundes 4.

Der Bohrer 1 ist über ein Gewinde 13 lösbar mit einer Bohreraufnahme 14 verbunden. Durch diese Maßnahme ist die Montage der Führungshülse 2 problemlos und es läßt sich der Bohrer 1 bei abgenutztem Bohrplättchen 15 sehr einfach austauschen.

Am Bohrschaft 3 sind Bohrmehlnuten 16 vorgesehen, die anfallendes Bohrmehl durch die Öffnung 11 und durch die Öffnung 12 aus dem Bohrloch 5 heraustransportieren. Um das Abführen des Bohrmehls zu beschleunigen, sind am Bund 4 schaufelförmige Nuten 17 angebracht.

In Figur 2 ist eine Führungshülse 22 dargestellt, deren konische Innenfläche entgegengesetzt zu der in Figur 1 dargestellten Innenfläche 10 verläuft.

In Figur 3 ist eine Ausführungsform einer Bohrvorrichtung dargestellt, bei der der Bund 4 als tellerförmiger Bund 24 mit gewölbter Lagerfläche ausgebildet ist. Der Bohrer befindet sich hier in der maximalen seitlichen Auslenkung.

Am Hülsenrand 9 der Führungshülsen 2, 22 ist eine Lagerfläche aus Kunststoff 18 vorgesehen.

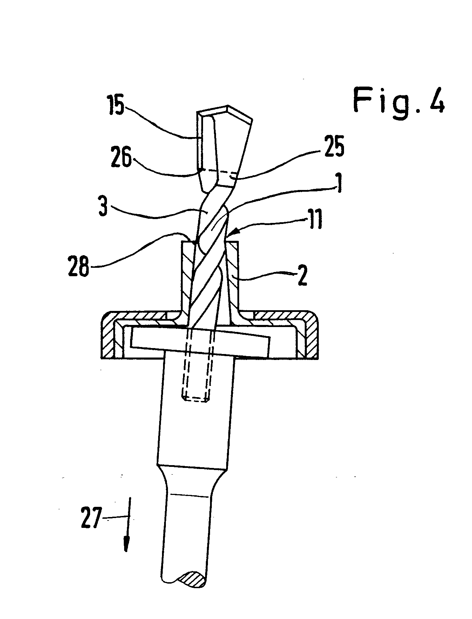

In Figur 4 ist eine Bohrvorrichtung dargestellt, bei der der Bohrschaft 3 unmittelbar unterhalb des Bohrplättchens eine konisch verlaufende Erweiterung 25 hat. Die Erweiterung 25 ist dabei so ausgebildet, daß ihr Durchmesser bereits unterhalb der Unterkante 26 des Bohrplättchens 15 größer ist als der Durchmesser der Öffnung 11 der Führungshülse 2.

Die Erweiterung 25 bildet somit einen Rückziehanschlag, der beim Zurückziehen des Bohrers 1 in Pfeilrichtung 27 bei im Bohrloch 5 festsitzender Führungshülse 2 am Öffnungsrand 28 der Führungshülse 2 anschlägt. Durch weiteres Zurückziehen des Bohrers in Pfeilrichtung 27 wird dieser zusammen mit der Führungshülse 2 aus dem Bohrloch 5 herausgezogen. Die im wesentlichen ringförmige Erweiterung 25 bildet einen kantenlosen Anschlag für den Öffnungsrand 28, so daß dieser nicht beschädigt wird. Ohne die Erweiterung 25 würde die Unterkante 26 des Bohrplättchens 15 am Öffnungsrand 28 zur Anlage kommen und dabei diesen beschädigen. Der Öffnungsrand 28 könnte dadurch sich vergrößern, wodurch sich die Führung für den Bohrschaft verschlechtern würde.

Die in Figur 4 dargestellte konische Erweiterung 25 ist lediglich als bevorzugtes Ausführungsbeispiel zu betrachten, jedoch kann auch ein anders geformter Rand oder dergleichen als Erweiterung dienen, die beim Zurückziehen des Bohrers einen Rückziehanschlag für den Öffnungsrand 28 bildet.

## Ansprüche

1. Bohrvorrichtung zur Herstellung von Bohrlöchern mit Hinterschneidung, die einen Bohrer mit einem den Bohrschaft überragenden Bohrplättchen und einen am Bohrschaft abstehenden Bund hat, **dadurch gekennzeichnet**, daß zwischen Bund (4, 24) und Bohrblättchen (15) der Bohrschaft (3) von einer Führungshülse (2, 22) mit an ihren beiden Enden unterschiedlich großen Öffnungen (11, 12) umschlossen ist, die als Gegenlager für den Bund (4, 24) und als Wandanschlag einen als Flansch oder dgl. ausgebildeten überstehenden Hülsenrand (9) hat.

2. Bohrvorrichung nach Anspruch 1, **dadurch gekennzeichnet**, daß die Führungshülse (2, 22) eine konische Innenfläche (10) hat.

3. Bohrvorrichtung nach einem der Ansprüche 1 oder 2, **dadurch gekennzeichnet**, daß die der Bohrspitze zugewandte Seite des Hülsenrandes (9) eine Lagerfläche aus Kunststoff oder Gummi hat.

4. Bohrvorrichtung nach einem der vorhergehenden Ansprüche, **dadurch gekennzeichnet**, daß der Bund (4, 24) gewölbt oder kugelförmig ausgebildet ist.

5. Bohrvorrichtung nach einem der vorhergehenden Ansprüche, **dadurch gekennzeichnet**, daß die dem Bund (4, 24) zugewandte Seite des Hülsenrandes (9) eine gewölbte Anlagefläche (8) bildet.

6. Bohrvorrichtung nach einem der vorhergehenden Ansprüche, **dadurch gekennzeichnet**, daß die Führungshülse (2, 22) an eine Absaugeinrichtung angeschlossen ist.

7. Bohrvorrichtung nach einem der vorhergehenden Ansprüche, **dadurch gekennzeichnet**, daß der Bohrschaft (3) Bohrmehlnuten (16) hat.

8. Bohrvorrichtung nach einem der vorhergehenden Ansprüche, **dadurch gekennzeichnet**, daß der Bohrer (1) am Bohrschaft (3) unterhalb des Bohrplättchens (15) eine ringförmige Erweiterung (25) hat, die im Durchmesser größer ist als der Öffnungsdurchmesser der ihr zugewandten Öffnung (11) der Führungshülse (2) und die am Öffnungsrand (28) der Führungshülse (2) beim Zurückziehen des Bohrer (1) anschlägt.

9. Bohrvorrichtung nach Anspruch 8, **dadurch gekennzeichnet,** daß die Erweiterung (25) vom Bohrschaft (3) ausgehend sich konisch in Richtung Bohrerspitze erweitert.

10. Bohrvorrichtung nach einem der Ansprüche 1 oder 2, **dadurch gekennzeichnet,** daß die Erweiterung (25) das Bohrplättchen (15) an den seinen seitlichen Schneiden abgewandten Rückseiten abdeckt.

# Fig.1

# Fig.2

# Fig.3

Fig. 4